# EUROPEAN PATENT APPLICATION

(11) **EP 2 394 874 A1**
(43) Date of publication of application: **14.12.2011**
(21) Application number: 09839626.0
(22) Date of filing: 03.02.2009
(51) Int. Cl.: B60W 30/00, B60W 10/00, B60W 10/04, B60W 10/10, B60W 10/18

(54) **VEHICLE TRAVEL CONTROL DEVICE**

(71) Applicant: Toyota Jidosha Kabushiki Kaisha, Toyota-shi, Aichi 471-8571 (JP)
(72) Inventor: SHONO, Shoichi, Toyota-shi Aichi 471-8571 (JP); USAMI, Tomohiro, Toyota-shi Aichi 471-8571 (JP); MOTOZONO, Yoshikazu, Toyota-shi Aichi 471-8571 (JP)
(74) Representative: Winter, Brandl, Fürniss, Hübner, Röss, Kaiser, Polte - Partnerschaft
(86) International application number: PCT/JP2009/051796
(87) International publication number: WO 2010/089848

(57) **Abstract**

There is provided a vehicle travel control device capable of controlling acceleration and deceleration without causing a driver to feel uncomfortable.

The vehicle travel control device includes: a vehicle deceleration control section (7) which operates at least two of a throttle control section (11), a downshifting control section (12), and a brake control section (13) on the basis of target deceleration; a target deceleration setting section (6) which sets the target deceleration; and changing means for changing the operation order of the throttle control section (11), the downshifting control section (12), and the brake control section (13) according to the target deceleration set by the target deceleration setting section (6).

## Description

### Technical Field

The present invention relates to a vehicle travel control device which controls traveling of a vehicle.

### Background Art

A technique of performing control such that traveling of a vehicle becomes appropriate is known. For example, Patent Literature 1 discloses an inter-vehicle control device which performs acceleration and deceleration control by operating a plurality of kinds of deceleration means with different decelerations according to the distance from a vehicle ahead while shifting to the deceleration means sequentially in ascending order of deceleration.
Patent Literature 1: Japanese Unexamined Patent Application Publication No. 2000-142167

### Summary of Invention

### Technical Problem

The inter-vehicle control device described above performs the acceleration and deceleration control depending on the acceleration deviation while shifting sequentially from means for small deceleration to means for large deceleration.

In the inter-vehicle control device described above, however, when performing acceleration and deceleration control, each deceleration means is made to operate in a fixed order of throttle control, accelerator OFF control, downshifting control, and brake control. Accordingly, there are cases where a driver feels uncomfortable when the acceleration and deceleration control is performed if target deceleration is large.

Therefore, the present invention has been made to solve the above-described problem, and it is an object of the present invention to provide a vehicle travel control device capable of controlling acceleration and deceleration without causing a driver to feel uncomfortable.

### Solution to Problem

In order to solve the above-described problem, the present invention is **characterized in that** a vehicle travel control device includes: vehicle deceleration control means for operating at least two of a throttle control section, a downshifting control section, and a brake control section on the basis of target deceleration; target deceleration setting means for setting the target deceleration; and changing means for changing the operation order of the throttle control section, the downshifting control section, and the brake control section according to the target deceleration set by the target deceleration setting means.

In this vehicle travel control device, deceleration of the vehicle can be performed by changing the operation order of the throttle control section, the downshifting control section, and the brake control section according to the set target deceleration.

In addition, preferably, the vehicle travel control device described above further includes acquisition means for acquiring road line shape information. In addition, it is preferable that the target deceleration setting means set the target deceleration according to the road line shape information acquired by the acquisition means.

In addition, it is preferable to further include vehicle speed detecting means for detecting a vehicle speed, and it is preferable that the target deceleration setting means set the target deceleration when it is determined that it is necessary to operate the vehicle deceleration control section on the basis of the road line shape information acquired by the acquisition means and the vehicle speed detected by the vehicle speed detecting means.

### Advantageous Effects of Invention

As described in detail above, according to the present invention, it is possible to obtain the vehicle travel control device capable of controlling acceleration and deceleration without causing a driver to feel uncomfortable.

### Brief Description of Drawings

[Fig. 1] Fig. 1 is a block diagram showing the configuration of a vehicle travel control device according to an embodiment of the present invention.
[Fig. 2] Fig. 2 is a flow chart showing the operation procedure of a deceleration control routine.
[Fig. 3] Fig. 3 is a view showing an example of the road along which a vehicle having a vehicle travel control device mounted therein travels.
[Fig. 4] Fig. 4 is a view showing an example of the size of the deceleration effect by each of downshifting control, automatic brake control, and brake operation.
[Fig. 5] Fig. 5 is a view showing the vehicle speed and the like when deceleration control is performed in the case of target deceleration G < 1.5 m/S².
[Fig. 6] Fig. 6 is a view showing the vehicle speed and the like when deceleration control is performed in the case of target deceleration 1.5 m/S² ≤ target deceleration G < 2.5 m/S².
[Fig. 7] Fig. 7 is a view showing the vehicle speed and the like when deceleration control is performed in the case of target deceleration G ≥ 2.5 m/S².

### Description of Embodiments

Hereinafter, embodiments of the present invention will be described. In addition, the same reference numerals are used for the same components, and repeated explanation thereof will be omitted.

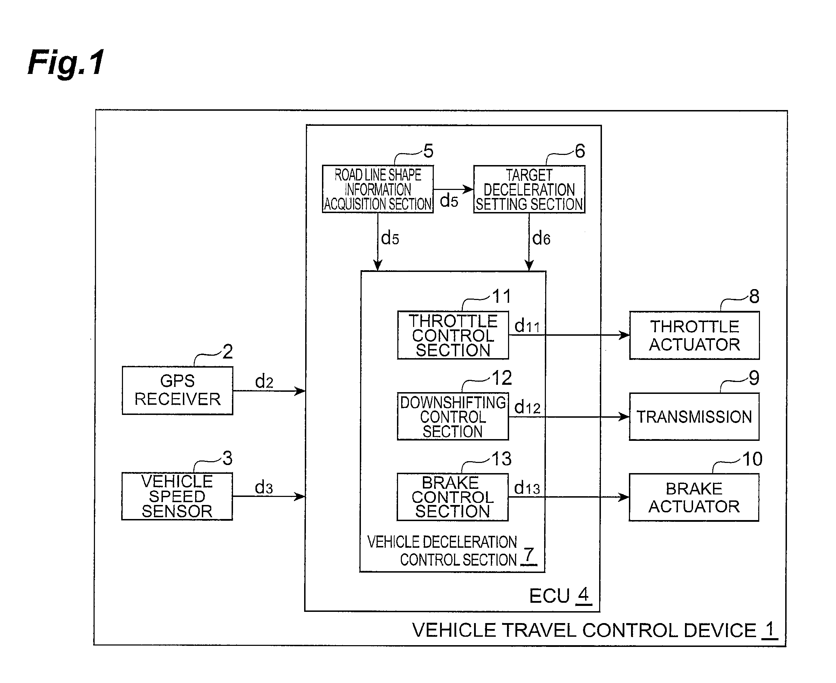

Fig. 1 is a block diagram showing the configuration of a vehicle travel control device 1 according to an embodiment of the present invention.

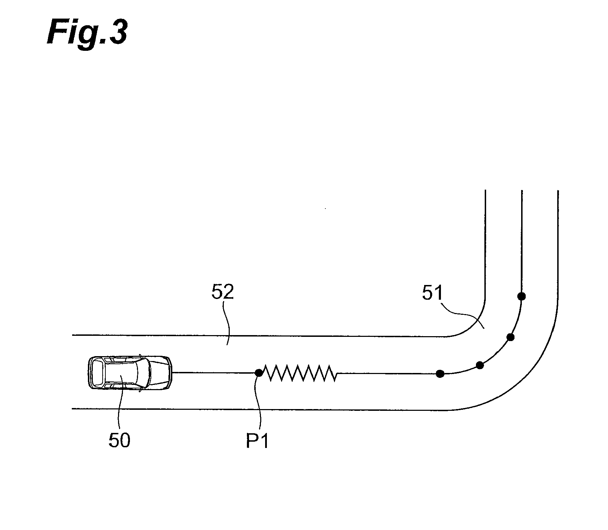

The vehicle travel control device 1 includes a GPS receiver 2, a vehicle speed sensor 3, an ECU 4, a throttle actuator 8, a transmission 9, and a brake actuator 10, and is mounted in a vehicle 50 shown in Fig. 3.

The GPS receiver 2 receives two-dimensional positional information indicating the current location of the vehicle 50 and outputs the current location data d2 to the ECU 4. The vehicle speed sensor 3 is vehicle speed detecting means for detecting the travel speed (vehicle speed) of the vehicle 50, and outputs to the ECU 4 the vehicle speed data d3 indicating the detected vehicle speed.

The ECU 4 includes a CPU, a ROM, a RAM, an input/output port, and the like, and realizes functions as a road line shape information acquisition section 5, a target deceleration setting section 6, and a vehicle deceleration control section 7 by operating the CPU to read and write the data from and to the RAM according to a control program stored in the ROM.

The road line shape information acquisition section 5 acquires the road line shape information indicating the shape of the road along which the vehicle 50 travels, such as a straight line, a curve, or a T junction, or a change in the number of lanes on the basis of the current location data d2 and the road map data near the current position of the vehicle 50 and outputs the acquired road line shape information d5 to the target deceleration setting section 5 and the ECU 4.

When the vehicle deceleration control section 7 determines that deceleration is required on the basis of the vehicle speed data d3 and the road line shape information d5, the target deceleration setting section 6 sets a speed, which should be reduced per unit time according to the vehicle speed data d3 and the road line shape information d5, as a target deceleration d6 and outputs the set target deceleration d6 to the vehicle deceleration control section 7.

The vehicle deceleration control section 7 performs vehicle deceleration control for operating any deceleration means of the throttle actuator 8, the transmission 9, and the brake actuator 10 when deceleration of the vehicle 50 is required. The vehicle deceleration control section 7 includes a throttle control section 11, a downshifting control section 12, and a brake control section 13 which control the throttle actuator 8, the transmission 9, and the brake actuator 10, respectively.

The throttle actuator 8 adjusts the opening of a throttle of a gasoline engine (not shown), and slows down the vehicle 50 by narrowing the opening of the throttle.

The transmission 9 is an automatic transmission, and slows down the vehicle by performing downshifting for engine brake. The brake actuator 10 slows down the vehicle by operating the brake system in response to a driver's operation on the brake pedal to generate the braking force of a wheel.

In addition, the throttle control section 11 outputs a control signal d11 to the throttle actuator 8 in order to narrow the opening of the throttle. The downshifting control section 12 outputs a control signal d12 to the transmission 8 in order to perform downshifting. In addition, the brake control section 13 outputs a control signal d13 to the brake actuator 9 in order to increase the brake force according to the operation state of the driver on the brake pedal.

Next, an operation of the vehicle travel control device 1 with the above configuration will be described. Here, as shown in Fig. 3, a case is considered in which the vehicle 50 is traveling along the road 52 with an almost rectangular left curve 51.

The speed when the vehicle 50 enters the left curve 51 is not always equal but changes depending on the traveling conditions or the feeling of the driver. If the entry speed is high, it is necessary to realize deceleration accordingly. In contrast, if the entry speed is low, it is necessary to realize smooth deceleration.

In addition, most drivers who drive the vehicle 50 reduce the speed by operating the brake pedal by themselves to operate the brake system when passing the left curve 51, but there are some drivers who reduce the speed by performing an operation on the brake system and also performing downshifting based on a manual operation before and after the operation to operate the engine brake.

Thus, in usual cases, deceleration of the vehicle 50 is performed by the operation of the driver. Accordingly, in order to improve the drivability and gas mileage when the vehicle 50 travels on the road 52 before the curve 51 so that the driver does not feel uncomfortable for the deceleration of the vehicle 50, cooperation of the operation of the driver and the automatic deceleration is needed. In order to do so, it is appropriate to set the operation order of each deceleration means variably to perform control such that deceleration according to various situations is performed. In the present embodiment, the deceleration control routine is executed as follows in consideration of this point.

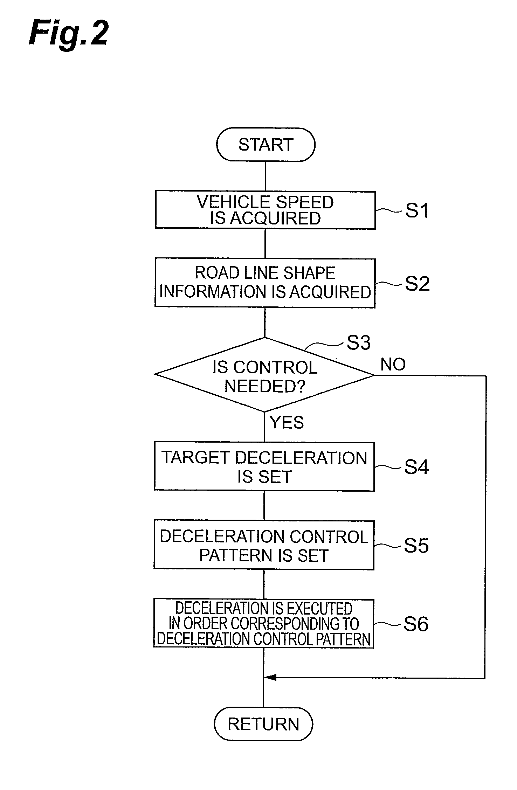

Fig. 2 is a flow chart showing the operation procedure of the deceleration control routine by the vehicle travel control device 1.

When the operation starts, the vehicle travel control device 1 acquires the vehicle speed data d3 output from the vehicle speed sensor 3 in S 1 and then acquires the road line shape information d5 by the road line shape information acquisition section 5 in S2. Then, in S3, the vehicle deceleration control section 7 determines whether or not deceleration control is required on the basis of the vehicle speed data d3 acquired in S 1 and the road line shape information d5 acquired in S2. The process proceeds to S4 if the deceleration control is required. Otherwise, the deceleration control routine ends. In S3, the vehicle deceleration control section 7 determines that deceleration control is required, for example, if the vehicle speed exceeds a reference speed when the road 52 has a curve, such as the left curve 51, ahead.

Then, in S4, the vehicle travel control device 1 operates the target deceleration setting section 6 to set the target deceleration. Then, in S5, a deceleration control pattern is set according to the target deceleration set in S4. In S6, the operation order of the throttle control section 11, the downshifting control section 12, and the brake control section 13 is changed according to the deceleration control pattern set in S5 to reduce the speed in the order according to the deceleration control pattern. Then, the deceleration control routine ends. In S6, the vehicle deceleration control section 7 operates as changing means.

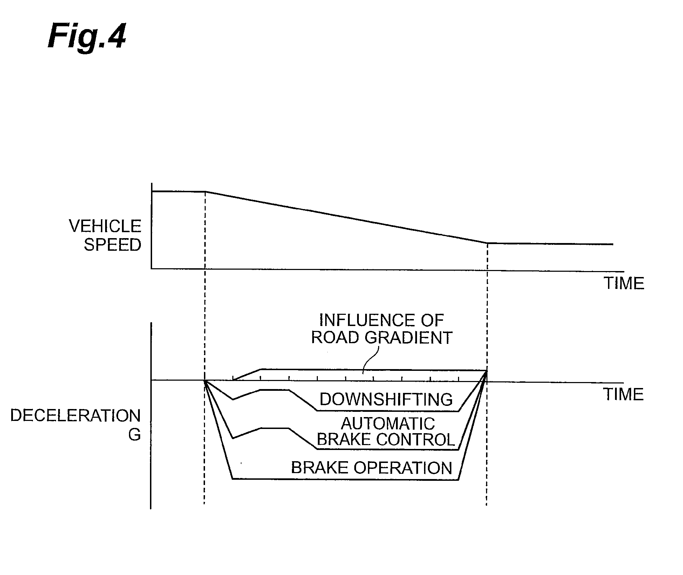

Incidentally, in order to slow down the vehicle 50, three kinds of means of operating a brake system (brake operation), operating an engine brake by downshifting, and increasing the brake force of the brake system (automatic brake control) may be considered. As shown in Fig. 4, the deceleration effect obtained when operating each means is highest in the case of brake operation. Then, the deceleration effect decreases in the order of automatic brake control and downshifting.

Deceleration by brake operation is based on the operation of a driver, but deceleration by downshifting and deceleration by automatic brake control are automatically performed at the vehicle 50 side. Usually, the driver is not aware that the latter deceleration is performed. For this reason, when the latter deceleration is performed, the driver may feel uncomfortable for the deceleration depending on the execution timing or the size of deceleration. Therefore, it is preferable that the deceleration by downshifting and the deceleration by automatic brake control not be operated more than needed.

However, for example, when a vehicle travels through the entry point p1 of cornering before the curve 51 but the vehicle speed is very high and sufficient deceleration is not performed until the vehicle can travel safely, it is appropriate not only to perform the deceleration by brake operation but also to perform the deceleration by automatic brake control and the deceleration by downshifting automatically regardless of whether or not the driver is aware of it so that the vehicle can travel safely.

In consideration of the above point, three deceleration control patterns are set according to the size G of target deceleration in the vehicle travel control device 1. That is, they are three patterns in cases of G < 1.5 m/S² (first pattern), 1.5 m/S² ≤ G < 2.5 m/S² (second pattern), and G ≥ 2.5 m/S² (third pattern). Here, the size G of target deceleration indicates deceleration required until reaching a point P1 from the spot where the accelerator pedal is not pressed.

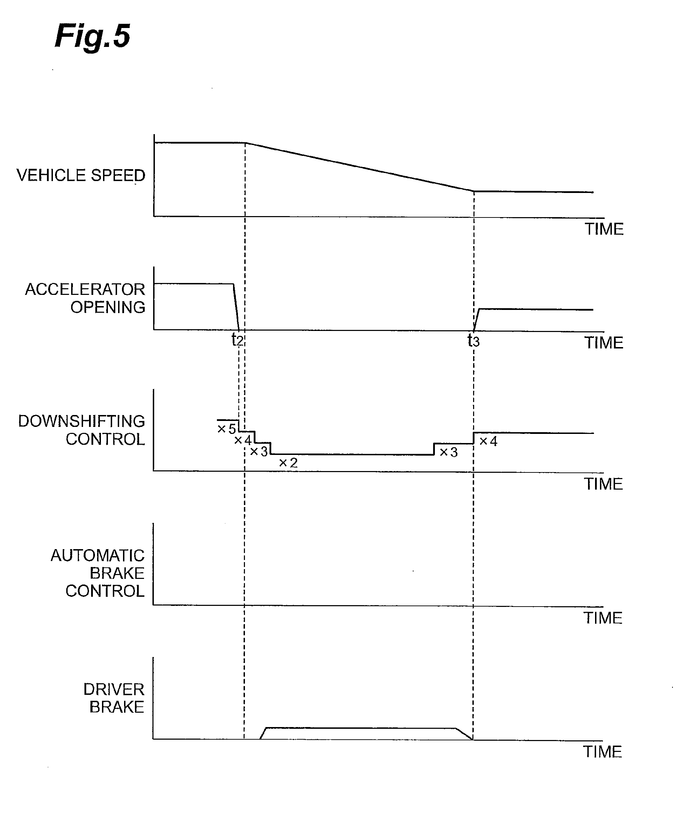

Figs. 5, 6, and 7 are views showing level changes in the vehicle speed, accelerator opening, downshifting control, automatic brake control, and driver brake when performing deceleration control according to each deceleration control pattern.

As shown in Fig. 5, in the first pattern, only the deceleration by brake operation is sufficient since target deceleration is small. Accordingly, only the deceleration by downshifting control is performed without performing the deceleration by automatic brake control. In addition, the downshifting control starts at a timing t2 at which putting on the accelerator pedal is stopped, and the downshifting control ends at a timing t3 at which putting on the accelerator pedal is started.

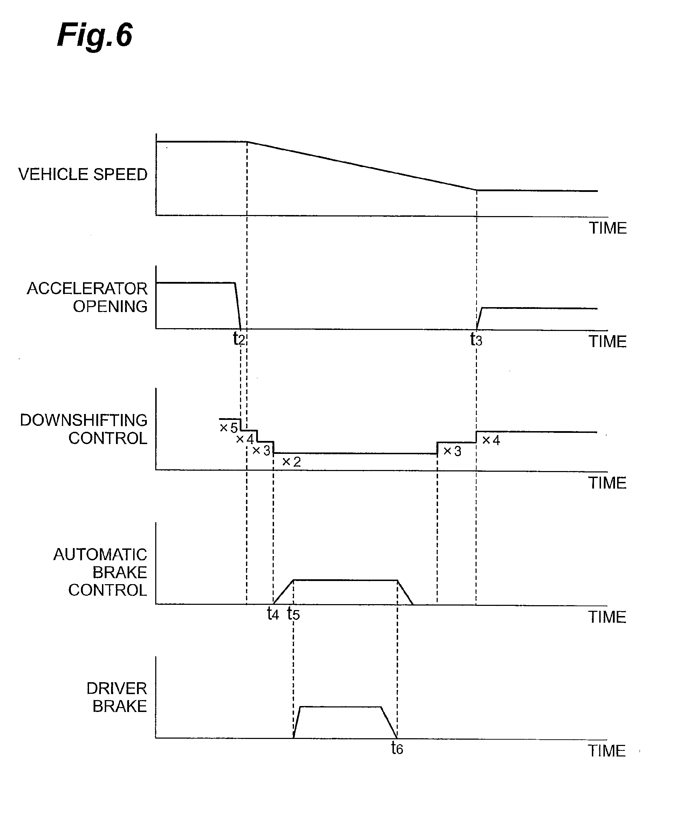

Next, as shown in Fig. 6, in the second pattern, deceleration by automatic brake control is performed in addition to the deceleration by brake operation since target deceleration is moderate. Accordingly, the deceleration by automatic brake control is performed at a timing t4, at which downshifting control ends, after the timing t2. In addition, oil pressure of the brake system increases up to timing t5. After the timing t5, the oil pressure of the brake system is fixed. Then, at a timing t6 at which the brake operation is turned off (putting on the brake pedal is stopped), the oil pressure of the brake system is decreased. Thus, in the second pattern, deceleration by automatic brake control is executed after executing deceleration by downshifting control. In this way, a quick transition to the gas saving mode is made.

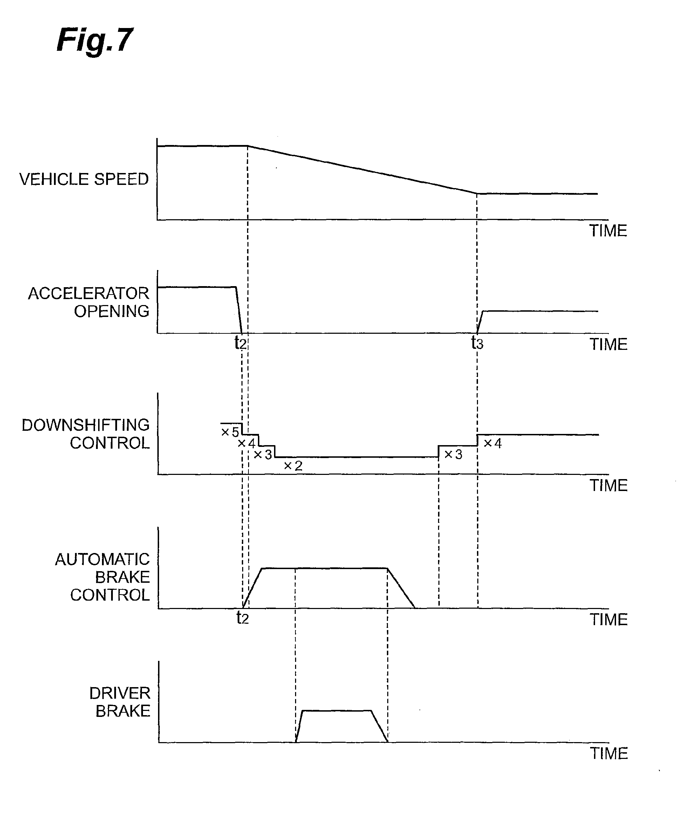

Moreover, as shown in Fig. 7, in the third pattern, deceleration by automatic brake control is performed immediately since target deceleration is quite large. Accordingly, the deceleration by automatic brake control is performed from the earliest possible time in addition to the deceleration by brake operation. In this case, deceleration by downshifting control and deceleration by automatic brake control are simultaneously started at the timing t2 and the deceleration by automatic brake control is performed during the deceleration by downshifting control, thereby increasing the deceleration effect by both the deceleration.

As described above, the vehicle travel control device 1 changes the operation order of deceleration by downshifting control and deceleration by automatic brake control by setting a plurality of deceleration control patterns and changing the deceleration control pattern executed according to the size of target deceleration. Accordingly, it is possible to prevent a driver from feeling uncomfortable when deceleration is performed. In addition, it is also possible to improve the ease of driving by performing deceleration by downshifting control or deceleration by automatic brake control when entering a curve, for example. By increasing the number of revolutions of an engine by performing deceleration by downshifting control when entering a curve, a quick transition to the gas saving mode becomes easy. This can improve the gas mileage.

The above is an explanation about the embodiments of the present invention, and this does not limit the apparatus and the method of this invention and various modifications may be easily executed. In addition, an apparatus or a method obtained by combining the components, the functions, the features, and the method steps appropriately is also included in the present invention.

### Industrial Applicability

The present invention can be used for vehicle manufacturing industry or vehicle parts manufacturing industry.

### Reference Signs List

- 1:: vehicle travel control device
- 2:: GPS receiver
- 3:: vehicle speed sensor
- 4:: ECU
- 5:: road line shape information acquisition section
- 6:: target deceleration setting section
- 7:: vehicle deceleration control section
- 11:: throttle control section
- 12:: downshifting control section
- 13:: brake control section

## Claims

1. A vehicle travel control device comprising:
vehicle deceleration control means for operating at least two of a throttle control section, a downshifting control section, and a brake control section on the basis of target deceleration;
target deceleration setting means for setting the target deceleration; and
changing means for changing an operation order of the throttle control section, the downshifting control section, and the brake control section according to the target deceleration set by the target deceleration setting means.

2. The vehicle travel control device according to claim 1, further comprising:
acquisition means for acquiring road line shape information, wherein the target deceleration setting means sets the target deceleration according to the road line shape information acquired by the acquisition means.

3. The vehicle travel control device according to claim 2, further comprising:
vehicle speed detecting means for detecting a vehicle speed, wherein the target deceleration setting means sets the target deceleration when it is determined that it is necessary to operate the vehicle deceleration control section on the basis of the road line shape information acquired by the acquisition means and the vehicle speed detected by the vehicle speed detecting means.
